# EUROPEAN PATENT SPECIFICATION

(11) **EP 2 993 115 B1**
(45) Date of publication and mention of the grant of the patent: **19.10.2016**
(21) Application number: 15174268.1
(22) Date of filing: 29.06.2015
(51) Int. Cl.: B62J 1/12, B62J 9/00

(54) **SEAT SUPPORT STRUCTURE OF SADDLE-RIDE-TYPE VEHICLE**
SITZSTÜTZSTRUKTUR EINES SATTELFAHRZEUGS
STRUCTURE DE SUPPORT DE SIÈGE DE VÉHICULE À MONTURE À SELLE

(30) Priority: 03.09.2014 JP 2014178916
(43) Date of publication of application: 09.03.2016
(73) Proprietor: HONDA MOTOR CO., LTD., Tokyo, 107-8556 (JP)
(72) Inventor: Atsuchi, Michio, Saitama, 351-0193 (JP); Yamanaka, Takasumi, Saitama, 351-0193 (JP); Hara, Naoki, Saitama, 351-0193 (JP)
(74) Representative: Beder, Jens

(56) References cited:
- WO-A1-2015/019413
- JP-A- H1 095 376
- JP-A- H11 334 667

## Description

The present invention relates to a seat support structure of a saddle-ride-type vehicle.

Conventionally, for example, as disclosed in JP-A-11-334667, there has been known a seat support structure of a saddle-ride-type vehicle which includes:
a handle bar (28);
a seat (7) which is arranged behind the handle bar (28) with a straddling space interposed therebetween;
a storage box (6) which is arranged below the seat (7);
a support member (7c) which supports the seat (7) on a front portion of the storage box (6) in a pivotable manner; and
a leaf spring (11) which resiliently holds the seat (7) by being brought into contact with a seat-side contact portion (9c) of the seat in an open state.
Due to such a structure, by providing the leaf spring to a seat hinge portion, the seat can be maintained in an open state due to a resilient repulsive force of the leaf spring. Accordingly, the structure can be manufactured at a low cost.

In the above-mentioned conventional seat support structure of a saddle-ride-type vehicle, the leaf spring (11) is arranged below the support member (7c) in a longitudinally extending manner, and the seat-side contact portion (9c) is brought into contact with a leaf-spring-side contact portion (11c) in front of the support member (7c).

Accordingly, an arrangement space for the leaf spring (11) and a contact space between the seat-side contact portion (9c) and the leaf-spring-side contact portion (11c) are elongated in the longitudinal direction. As a result, a straddling space in front of the seat is narrowed.

It is an object of the invention to provide a seat support structure of a saddle-ride-type vehicle which can prevents the narrowing of a straddling space in front of a seat while using a leaf spring.

To overcome the above-mentioned drawback, the invention is directed to a seat support structure of a saddle-ride-type vehicle which includes:
a handle bar;
a seat which is arranged behind the handle bar with a straddling space interposed therebetween;
a storage box which is arranged below the seat;
a support member which supports the seat in a pivotable manner on a front portion of the storage box; and
a leaf spring which is brought into contact with a seat-side contact portion of the seat in an open state so as to resiliently hold the seat, wherein
the leaf spring is disposed in a space between the support member and a storage box outer wall in the longitudinal direction of the vehicle, and the seat-side contact portion is configured to be brought into contact with a leaf-spring-side contact portion in the space between the support member and the storage box outer wall so as to hold the seat in an open state.

According to the seat support structure of a saddle-ride-type vehicle, the leaf spring can be arranged by making use of a space formed between the support member and the storage box outer wall which is apt to be a dead space. Further, the seat-side contact portion and the leaf-spring-side contact portion are brought into contact with each other by making use of the space and hence, it is possible to prevent the narrowing of the straddling space in front of the seat while using the leaf spring.

The seat support structure of a saddle-ride-type vehicle may be configured such that a rear side of the leaf-spring-side contact portion is brought into contact with the storage box outer wall when the seat is opened.

Due to such a constitution, when the seat is opened, the movement of the leaf-spring-side contact portion in the rearward direction is restricted by the storage box outer wall and hence, the acquisition of a desired resilient force using a leaf spring is facilitated. Accordingly, a size of the leaf spring can be miniaturized and a weight of the leaf spring can be reduced. At the same time, the leaf spring can easily acquire a function as a stopper.

In the seat support structure of a saddle-ride-type vehicle, the seat-side contact portion may be formed into a concave shape, and the leaf-spring-side contact portion may be formed into a projecting shape.

Due to such a constitution, it is possible to bring the seat-side contact portion and the leaf-spring-side contact portion into sufficient contact with each other in the narrow space formed between the support member and the storage box outer wall.

In the seat support structure of a saddle-ride-type vehicle, the leaf spring may have a pair of flange portions which are formed by bending left and right sides of the leaf spring toward a support member side, and the support member may be configured to be inserted into holes formed in the pair of flange portions respectively thus mounting the leaf spring between the support member and the storage box outer wall using the support member.

Due to such a constitution, it is unnecessary to prepare an additional part for mounting the leaf spring.

Further, the flange portion may be interposed between the portion to be supported of the seat and the supporting portion of the storage box at a pivoted portion. In this case, a friction can be reduced.

In the seat support structure of a saddle-ride-type vehicle, the leaf spring may have a cutaway portion between the leaf-spring-side contact portion and the pair of flange portions respectively.

Due to such a constitution, the pair of flange portions can be easily deflected in the lateral direction and hence, the mountability of the leaf spring can be enhanced.

Further, even if the pair of flange portions is deflected in the lateral direction, the deflection of the pair of flange portions is absorbed by the cutaway portions and hence, a force of the leaf-spring-side contact portion for holding the seat is not influenced by such deflection.
Fig. 1 is a side view showing an essential part of one example of a saddle-ride-type vehicle which adopts one embodiment of a seat support structure of a saddle-ride-type vehicle according to the invention.
Fig. 2(a) to Fig. 2(c) are views showing a seat, wherein Fig. 2(a) is a side view with a part cut away, Fig. 2(b) is a partially enlarged view of Fig. 2(a), and Fig. 2(c) is an enlarged cross-sectional view taken along a line c-c in Fig. 2(a).
Fig. 3 is a bottom view of the seat.
Fig. 4(a) and Fig. 4(b) are views showing a storage box 30, wherein Fig. 4(a) is a plan view, and Fig. 4(b) is a cross-sectional view taken along a line b-b in Fig. 4(a).
Fig. 5 is a side view of the storage box 30.
Fig. 6 is a front view with parts omitted of the storage box 30.
Fig. 7(a) to Fig. 7(c) are views showing a leaf spring 40, wherein Fig. 7(a) is a front view, Fig. 7(b) is a cross-sectional view taken along a line b-b in Fig. 7(a), and Fig. 7(c) is a bottom view.
Fig. 8(a), Fig. 8(b) and Fig. 8(c) are views for explaining the manner of operation.
Fig. 9 is a cross-sectional view taken along a line 9-9 in Fig. 6.

Hereinafter, an embodiment of a seat support structure of a saddle-ride-type vehicle according to the invention is explained by reference to drawings. Drawings are viewed in accordance with the direction of symbols and, in the explanation made hereinafter, directions such as "frontward", "rearward", "leftward", "rightward", "upward", and "downward" are directions as viewed from an operator. When necessary, in the drawings, the frontward direction of a vehicle is indicated by symbol Fr, the rearward direction of the vehicle is indicated by symbol Rr, the leftward direction of the vehicle is indicated by symbol L, the rightward direction of the vehicle is indicated by symbol R, the upward direction of the vehicle is indicated by symbol U, and the downward direction of the vehicle is indicated by symbol D. In the respective drawings, identical parts or similar parts are given the same symbol.

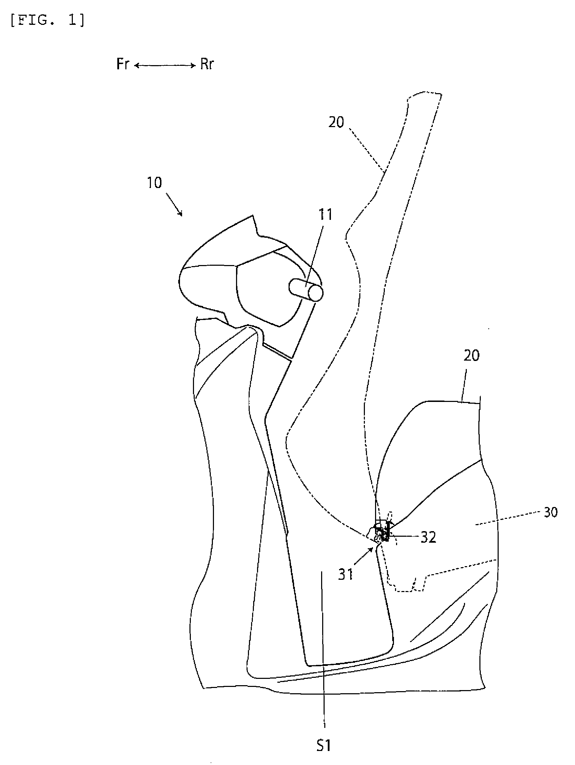

A saddle-ride-type vehicle 10 shown in Fig. 1 includes: a handle bar 11; a seat 20 which is arranged behind the handle bar 11 with a straddling space S1 interposed therebetween; a storage box 30 which is arranged below the seat 20; and a support member 32 which supports the seat 20 in a pivotable manner on a front portion 31 of the storage box 30.

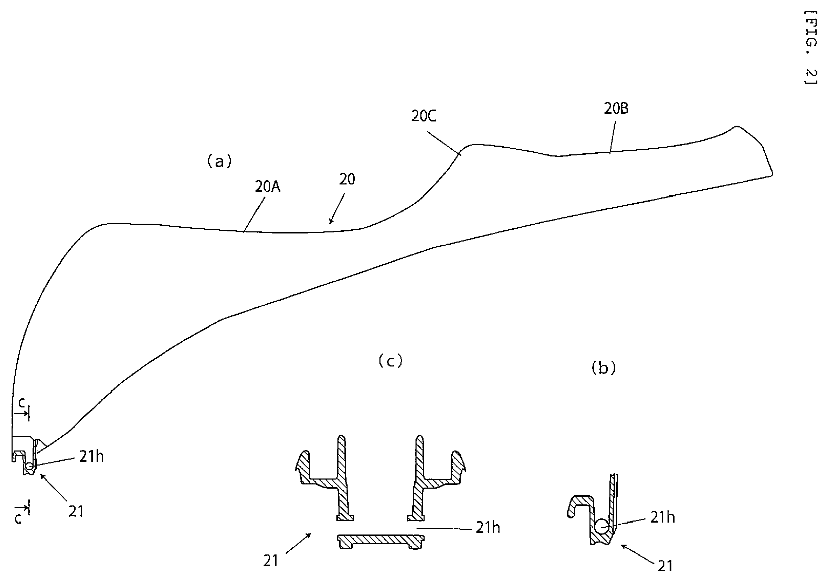

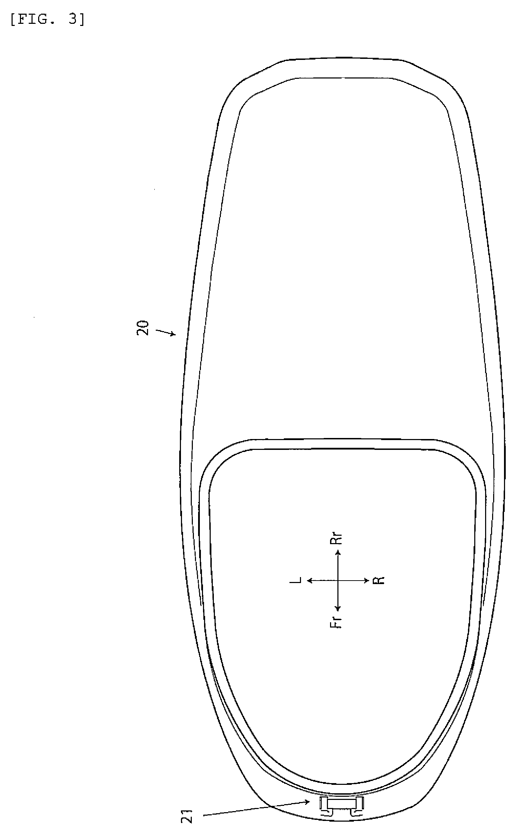

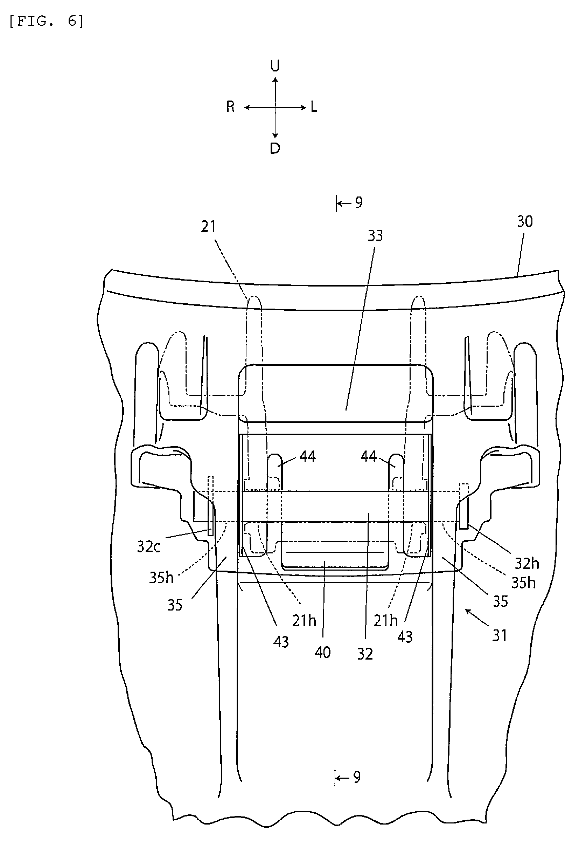

As shown in Fig. 2 and Fig. 3, a portion to be supported 21 which is pivotably supported by the support member 32 on the front portion 31 (see Fig. 6) of the storage box 30 is formed on a front lower portion of the seat 20.

Holes 21h are formed in the portion to be supported 21.

The seat 20 includes: a front seat 20A; a rear seat 20B; and a stepped portion 20C which forms a back rest between the front seat and the rear seat.

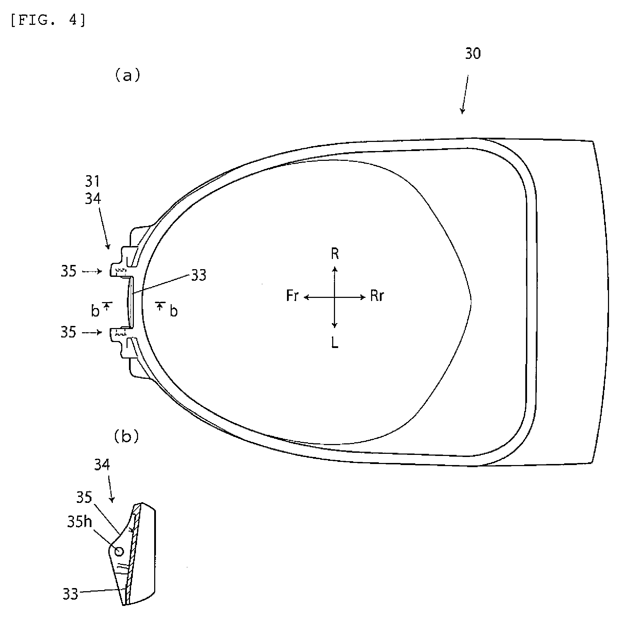

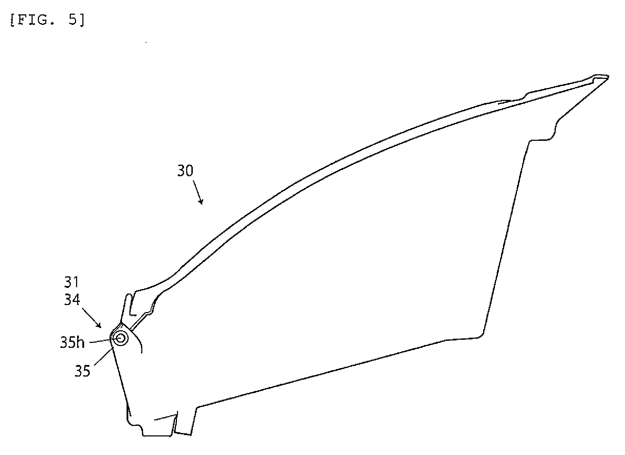

On the other hand, as shown in Fig. 4 to Fig. 6, a supporting portion 34 which supports the portion to be supported 21 of the seat 20 in a pivotable manner is formed on the front portion 31 of the storage box 30.

The supporting portion 34 has a pair of left and right bracket portions 35 which projects frontwardly from a storage box outer wall 33, and holes 35h are formed in the bracket portions 35 respectively.

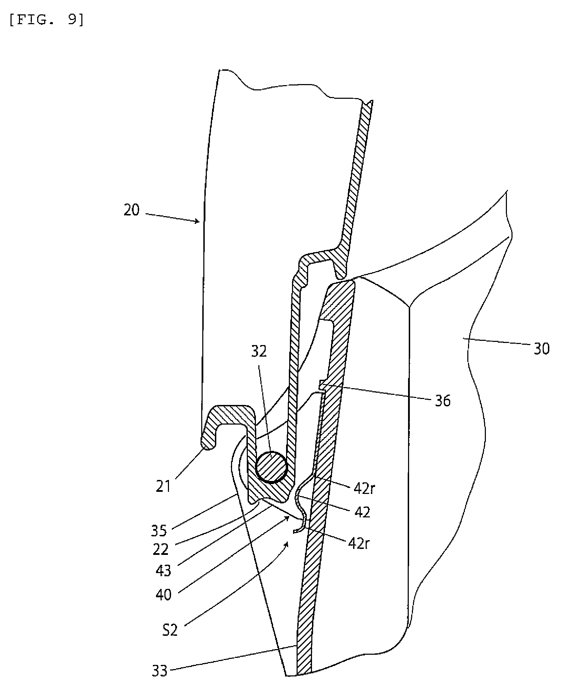

As shown in Fig. 6 and Fig. 9, the portion to be supported 21 (see Fig. 2(c)) of the seat 20 is interposed between the pair of left and right bracket portions 35, 35 as indicated by an imaginary line in Fig. 6, and the support member 32 is inserted into the holes 35h formed in the bracket portions 35 and the holes 21h formed in the portion to be supported 21 and hence, the seat 20 is mounted on the storage box 30 in a pivotable manner about the support member 32.

The support member 32 is a shaft-like (pin-like) member. In Fig. 6, symbol 32h indicates a head portion wider than a shaft portion, and symbol 32c indicates a retaining ring (C ring).

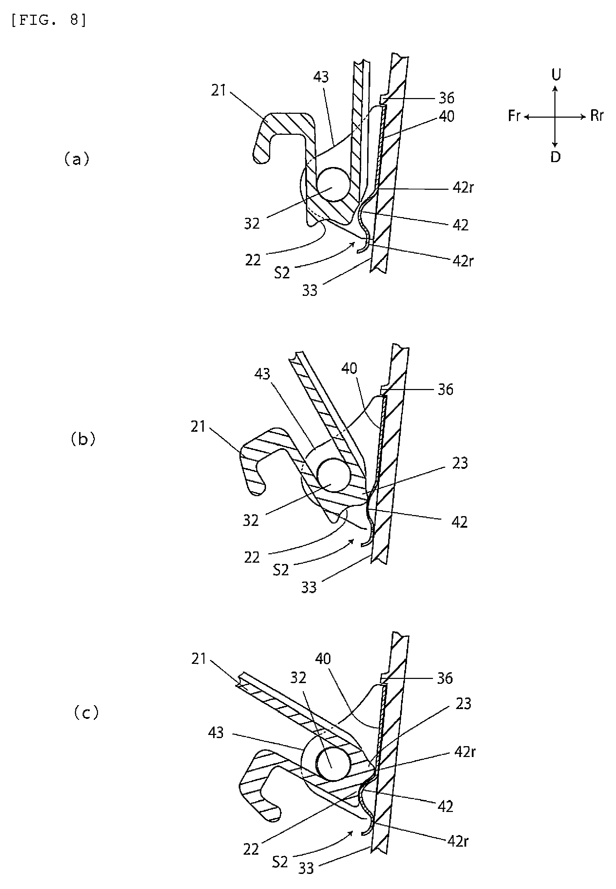

As shown in Fig. 8(c), the saddle-ride-type vehicle 10 includes a leaf spring 40 which is brought into contact with a seat-side contact portion 22 of the seat 20 in an open state (see an imaginary line in Fig. 1) so as to resiliently support the seat 20. The seat-side contact portion 22 is formed on the portion to be supported 21 of the seat 20.

The leaf spring 40 is arranged in a space S2 formed between the support member 32 and the storage box outer wall 33 in the longitudinal direction of the vehicle (directions indicated by arrows Fr, Rr). The seat-side contact portion 22 is brought into contact with a leaf-spring-side contact portion 42 in the space S2 formed between the support member 32 and the storage box outer wall 33 as shown in Fig. 8(c) so as to hold the seat 20 in an open state as indicated by an imaginary line in Fig. 1.

According to this seat support structure of a saddle-ride-type vehicle, the leaf spring 40 can be arranged by making use of the space S2 formed between the support member 32 and the storage box outer wall 33 which is apt to be a dead space. Further, the seat-side contact portion 22 and the leaf-spring-side contact portion 42 are brought into contact with each other by making use of the space S2 and hence, it is possible to prevent the narrowing of the straddling space S1 (Fig. 1) in front of the seat 20 while using the leaf spring 40.

As indicated by an imaginary line in Fig. 1, when the seat 20 is opened, as shown in Fig. 8(c), a rear side 42r of the leaf-spring-side contact portion 42 is brought into contact with the storage box outer wall 33.

Due to such a constitution, when the seat 20 is opened, the movement of the leaf-spring-side contact portion 42 in the rearward direction is restricted by the storage box outer wall 33 and hence, the leaf spring minimally collapses whereby the acquisition of a desired resilient force over a long period using the leaf spring 40 is facilitated. Accordingly, a size of the leaf spring 40 can be miniaturized and a weight of the leaf spring 40 can be reduced. At the same time, the leaf spring 40 can easily acquire a function as a stopper.

As shown in Fig. 8, the seat-side contact portion 22 is formed into a concave shape, and the leaf-spring-side contact portion 42 is formed into a projecting shape.

Due to such a constitution, it is possible to bring the seat-side contact portion 22 and the leaf-spring-side contact portion 42 into favorable contact with each other in the narrow space S2 formed between the support member 32 and the storage box outer wall 33.

Further, the seat-side contact portion 22 is formed into an arc-shaped recessed portion made of a gentle curve (a recessed portion in a waveform shape) as viewed in a side view, and in the same manner as the seat-side contact portion 22, the leaf-spring-side contact portion 42 is formed into an arc-shaped projecting portion made of a gentle curve (a projecting portion in the waveform shape) as viewed in a side view. Accordingly, a smooth contact state can be acquired between the seat-side contact portion 22 and the leaf-spring-side contact portion 42.

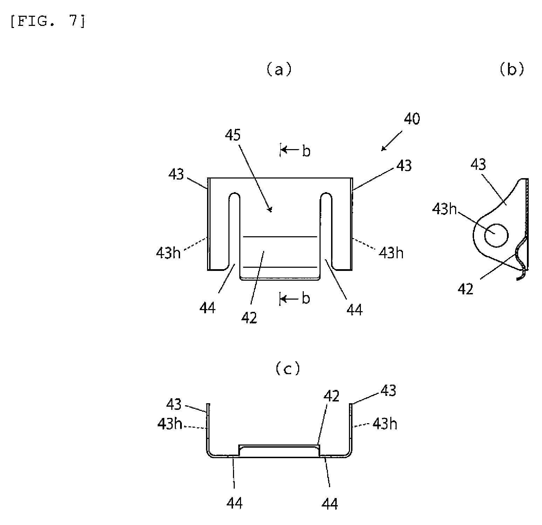

As shown in Fig. 6 and Fig. 7, the leaf spring 40 has a pair of flange portions 43 which is formed by bending left and right sides of the leaf spring 40 toward a support member 32 side, and the support member 32 is inserted into holes 43h (Fig. 7(b)) formed in the pair of flange portions 43 respectively thus mounting the leaf spring 40 in the space (S2) formed between the support member 32 and the storage box outer wall 33 using the support member 32.

Due to such a constitution, it is unnecessary to prepare an additional part for mounting the leaf spring 40.

Further, by interposing the flange portions 43 of the metal-made leaf spring 40 between the portion to be supported 21 of the seat 20 and the bracket portions 35 which constitute the supporting portion of the storage box 30 in a pivoted portion, a friction can be reduced.

As shown in Fig. 6 and Fig. 7, the leaf spring 40 has a cutaway portion 44 between the leaf-spring-side contact portion 42 and the pair of flange portions 43 respectively.

Due to such a constitution, the pair of flange portions 43 becomes easily deflected in the lateral direction and hence, the leaf spring 40 can be easily interposed between the pair of left and right bracket portions 35, 35 so that the mountability of the leaf spring 40 can be enhanced.

Further, even when the pair of flange portions 43 is deflected in the lateral direction, the deflection of the pair of flange portions 43 is absorbed by the cutaway portions 44 and hence, a force of the leaf-spring-side contact portion 42 for holding the seat 20 is not influenced by such a deflection.

The manner of operation until the seat 20 is opened is explained by reference to Fig. 8.

When the seat 20 is closed as indicated by a solid line in Fig. 1 and as shown in Fig. 9, the seat-side contact portion 22 and the leaf-spring-side contact portion 42 are not brought into contact with each other as shown in Fig. 8(a). At this state of the operation, although the rear side 42r on a free end side (a lower side in the drawing) of the leaf-spring-side contact portion 42 is not brought into contact with the storage box outer wall 33, the rear side 42r may be configured to be brought into contact with the storage box outer wall 33.

In the course of opening the seat 20 as indicated by an imaginary line from a state indicated by a solid line in Fig. 1, as shown in Fig. 8(b) to Fig. 8(c), in the portion to be supported 21 which pivots together with the seat 20, a projecting portion 23 which is positioned in front of the seat-side contact portion 22 in the pivot direction deflects the leaf-spring-side contact portion 42 by pushing and gets over the leaf-spring-side contact portion 42 and hence, the seat-side contact portion 22 and the leaf-spring-side contact portion 42 are brought into contact with each other in fitting engagement whereby the seat 20 is held in an open state as indicated by an imaginary line in Fig. 1.

In Fig. 8 and Fig. 9, symbol 36 indicates a stopper for restricting an upward pivoting about the support member 32 (in the counterclockwise direction in Fig. 8 and Fig. 9) of the leaf spring 40.

Although the embodiment of the invention has been explained heretofore, the invention is not limited to the above-mentioned embodiment, and the invention can be carried out with modifications when appropriate without departing from the scope of the invention, as defined by the claims.
S1: straddling space, 10 saddle-ride-type vehicle, 11: handle bar, 20: seat, 22: seat-side contact portion, 30: storage box, 32: support member, 33: storage box outer wall, 40: leaf spring, 42: leaf-spring-side contact portion, 43: flange portion, 43h: hole, 44: cutaway portion

## Claims

1. A saddle-ride-type vehicle with seat support structure, the vehicle including:
a handle bar (11);
a seat (20) which is arranged behind the handle bar (11) with a straddling space (S1) interposed therebetween;
a storage box (30) which is arranged below the seat (20);
a support member (32) which supports the seat (20) in a pivotable manner on a front portion (31) of the storage box (30); and
a leaf spring (40) which is brought into contact with a seat-side contact portion (22) of the seat (20) in an open state so as to resiliently hold the seat (20), **characterized in that**
the leaf spring (40) is disposed in a space (S2) between the support member (32) and a storage box outer wall (33) in the longitudinal direction of the vehicle, and the seat-side contact portion (22) is configured to be brought into contact with a leaf-spring-side contact portion (42) in the space (S2) between the support member (32) and the storage box outer wall (33) so as to hold the seat (20) in an open state.

2. The vehicle according to claim 1,
**characterized in that**
a rear side (42r) of the leaf-spring-side contact portion (42) is brought into contact with the storage box outer wall (33) when the seat (20) is opened.

3. The vehicle according to claim 1 or 2,
**characterized in that**
the seat-side contact portion (22) is formed into a concave shape, and the leaf-spring-side contact portion (42) is formed into a projecting shape.

4. The vehicle according to any one of claims 1 to 3,
**characterized in that**
the leaf spring (40) has a pair of flange portions (43) which are formed by bending left and right sides of the leaf spring toward a support member (32) side, and the support member (32) is configured to be inserted into holes (43h) formed in the pair of flange portions (43) respectively thus mounting the leaf spring (40) in the space (S2) between the support member (32) and the storage box outer wall (33) using the support member (32).

5. The vehicle according to claim 4,
**characterized in that**
the leaf spring (40) has a cutaway portion (44) between the leaf-spring-side contact portion (42) and the pair of flange portions (43) respectively.

## Patentansprüche

1. Fahrzeug vom Sattelfahrtyp mit einer Sitzstützkonstruktion, wobei das Fahrzeug aufweist:
eine Lenkerstrange (11);
einen Sitz (20), der hinter der Lenkstange (11) angeordnet ist, mit einem Einfädelraum (S1), der dazwischen eingefügt ist;
ein Aufbewahrungsbehälter (30), der unter dem Sitz (20) angeordnet ist;
ein Stützelement (32), das den Sitz (20) in einer drehbaren Weise an einem vorderen Bereich (31) des Aufbewahrungsbehälters (30) stütz; und
eine Blattfeder (40), die in Kontakt mit einem sitzseitigen Kontaktbereich (22) des Sitzes (20) in einem offenen Zustand gebracht ist, um den Sitz (20) federnd zu halten,
**dadurch gekennzeichnet, dass**
die Blattfeder (40) in einem Raum (S2) zwischen dem Stützelement (32) und einer äußeren Wand (33) des Aufbewahrungsbehälters in der Längsrichtung des Fahrzeugs angeordnet ist und
der sitzseitige Kontaktbereich (22) ausgebildet ist, um in Kontakt mit einem blattfederseitigem Kontaktbereich (42) in dem Raum S2 zwischen dem Stützelement (32) und der äußeren Wand (33) des Aufbewahrungsbehälters gebracht zu werden, um den Sitz (20) in einem offenen Zustand zu halten.

2. Fahrzeug gemäß Anspruch 1,
**dadurch gekennzeichnet, dass**
eine hintere Seite (42r) des blattfederseitigen Kontaktbereichs (42) in Kontakt mit der äußeren Wand (33) des Aufbewahrungsbehälters gebracht wird, wenn der Sitz (20) geöffnet wird.

3. Fahrzeug gemäß Anspruch 1 oder 2,
**dadurch gekennzeichnet, dass**
der sitzseitige Kontaktbereich (22) in einer konkaven Form gebildet ist und der blattfederseitige Kontaktbereich (42) in einer herausstehenden Form gebildet ist.

4. Fahrzeug gemäß einem der Ansprüche 1 bis 3,
**dadurch gekennzeichnet, dass**
die Blattfeder ein Paar von Flanschbereichen (43) hat, die durch Biegen einer linken und einer rechten Seite der Blattfeder in Richtung zu dem Stützelement (32) hin gebildet werden, und das Stützelement (32) ausgebildet ist, um in Löcher (43h) eingeführt zu werden, die in dem Paar von Flanschbereichen (43) jeweils gebildet sind, um damit die Blattfeder (40) in dem Raum (S2) zwischen dem Stützelement (32) und der äußeren Wand (33) des Aufbewahrungsbehälters unter Verwendung des Stützelements (32) zu montieren.

5. Fahrzeug gemäß Anspruch 4,
**dadurch gekennzeichnet, dass**
die Blattfeder (40) jeweils zwischen dem blattfederseitigen Kontaktbereich (42) und dem Paar von Flanschbereichen (42) einen ausgeschnittenen Bereich (44) hat.

## Revendications

1. Véhicule de type à selle avec une structure de support de siège, le véhicule comprenant :
un guidon (11) ;
un siège (20) qui est agencé derrière le guidon (11) avec un espace d'enjambement (S1) intercalé entre eux ;
une boîte de rangement (30) qui est agencée sous le siège (20) ;
un élément de support (32) qui supporte le siège (20) d'une manière pivotante sur une première partie (31) de la boîte de rangement (30) ; et
un ressort à lames (40) qui est amené en contact avec la partie de contact du côté du siège (22) du siège (20) dans un état ouvert afin de maintenir, de manière résiliente, le siège (20),
**caractérisé en ce que**
le ressort à lames (40) est disposé dans un espace (S2) entre l'élément de support (32) et une paroi externe (33) de la boîte de rangement dans une direction longitudinale du véhicule, et la partie de contact du côté du siège (22) est configurée pour être amenée en contact avec une partie de contact du côté du ressort à lames (42) dans l'espace (S2) entre l'élément de support (32) et la paroi externe (33) de la boîte de rangement afin de maintenir le siège (20) dans un état ouvert.

2. Véhicule selon la revendication 1, **caractérisé en ce que**
un côté arrière (42r) de la partie de contact du côté du ressort à lames (42) est amené en contact avec la paroi externe (33) de la boîte de rangement lorsque le siège (20) est ouvert.

3. Véhicule selon la revendication 1 ou 2, **caractérisé en ce que**
la partie de contact du côté du siège (22) est formée selon une forme concave, et la partie de contact du côté du ressort à lames (42) est formée selon une forme en saillie.

4. Véhicule selon l'une quelconque des revendications 1 à 3, **caractérisé en ce que**
le ressort à lames (40) à une paire de parties de bride (43) qui sont formées en pliant les côtés gauche et droit du ressort à lames vers le côté d'un élément de support (32), et l'élément de support (32) est configuré pour être inséré dans des trous (43h) formés dans la paire de parties de bride (43) respectivement, permettant ainsi de monter le ressort à lames (40) dans l'espace (S2) entre l'élément de support (32) et la paroi externe (33) de la boîte de rangement, en utilisant l'élément de support (32).

5. Véhicule selon la revendication 4, **caractérisé en ce que**
le ressort à lames (40) a une partie découpée (44) entre la partie de contact du côté du ressort à lames (42) et la paire de parties de bride (43), respectivement.
